# EUROPEAN PATENT SPECIFICATION

(11) **EP 0 220 023 B1**
(45) Date of publication and mention of the grant of the patent: **07.07.1993**
(21) Application number: 86307782.2
(22) Date of filing: 08.10.1986
(51) Int. Cl.: G11B 13/04, G11B 11/10, G11B 7/013

(54) **Optical magnetic memory device**
Magnetooptische Speichervorrichtung
Dispositif de mémoire magnéto-optique

(30) Priority: 08.10.1985 JP 224601/85; 25.11.1985 JP 266752/85
(43) Date of publication of application: 29.04.1987
(73) Proprietor: SHARP KABUSHIKI KAISHA, Osaka 545 (JP)
(72) Inventor: Fuji, Hiroshi, Tenri-shi Nara-ken (JP); Maeda, Shigemi, Yamatokoriyama-shi Nara-ken (JP); Yamaguchi, Takeshi, 2613-1 Ichinomoto-cho Tenri-shi (JP); Deguchi, Toshihisa Daiya-Heights, Nara-shi Nara-ken (JP); Kobayashi, Shozou, Nara-shi Nara-ken (JP)
(74) Representative: Brown, Kenneth Richard

(56) References cited:
- EP-A- 0 089 045
- EP-A- 0 097 092
- EP-A- 0 144 436
- EP-A- 0 147 090
- EP-A- 0 156 916
- US-A- 3 513 457
- US-A- 3 696 346
- US-A- 4 472 748
- US-A- 4 475 183
- PATENT ABSTRACTS OF JAPAN, vol. 1, no. 80, 27 July 1977, page 1387 E 77;& JP-A-5216208
- PATENT ABSTRACTS OF JAPAN, vol. 9, no. 2 (P-325)(1725), 8 January 1985;& JP-A-59152551

## Description

The present invention relates to an optical memory device which employs a recording medium, and which records and reproduces data by irradiating the recording medium with an optical beam such as a laser beam. The recording medium is preferably, although not essentially, an optomagnetic disc.

Generally, in recording data by an optical memory device, recorded bits and non-recorded bits are formed on the recording medium. The memory device reproduces the data by detecting the interval between the recorded bits as reference marks. However, the data signal obtained by this reproduction process may not be reliable.

A device according to the preamble of claim 1 is known from EP-A-147 090.

Accordingly, the present invention aims, in one aspect, to provide an optical memory device capable of reproducing satisfactorily the data recorded on the recording medium.

The present invention also aim, in another aspect, to provide a data bit recording and reproducing method which increases recording density and enhances the reliability of the reproduced data signal.

In accordance with one aspect of the invention, an optical memory device for recording and reproducing data by irradiating an optical data recording medium with a laser beam spot, comprises:
recording means for recording data by alternately forming along tracks on said recording medium first portions and second portions having different physical states according to whether or not the recording medium has been irradiated with the laser beam spot, the length of each of said first portions being adjusted according to the data recorded, and being greater than the length of each of said second portions,
detecting means for detecting said second portions and determining the interval between said second portions for reproduction of the recorded data,
characterised in that:
said first portions are formed by irradiation with said laser beam spot so as to have a physical state changed from the physical state of the remaining region of the recording medium.

In accordance with another aspect of the invention, a method for recording and reproducing data comprises the steps of:
recording data by alternately forming along tracks on said recording medium first portions and second portions having different physical states according to whether or not the recording medium has been irradiated with the laser beam spot, the length of each of said first portions being adjusted according to the data recorded, and being greater than the length of each of said second portions;
detecting said second portions and determining the interval between said second portions for reproduction of the recorded data,
characterised in that:
said first portions are formed by irradiation with said laser beam spot so as to have a physical state changed from the physical state of the remaining region of the recording medium.

Preferably, the recorded and non-recorded portions of the data recording medium are formed by modulating the intensity of the laser beam spot according to the data recorded using a return-to-zero modulation method.

The present invention will become more fully understood from the detailed description given hereinbelow and the accompanying drawings which are given by way of example only, and thus are not limitative of the present invention, and wherein:
Fig. 1(a) is a chart for explaining an optical memory device on which the present invention is based;
Fig 1(b) shows a reproduced signal of the memory device of Fig. 1(a);
Fig. 2 is a circuit diagram showing the construction of the data reproducer of the optical memory device on which the present invention is based;
Fig. 3 is a signal waveform chart showing the signal waveforms generated in the reproducer of Fig. 2;
Figs. 4(a) through 4(d) show recording and reproducing characteristics of one form of optical memory device.
Figs. 5(a) through 5(d) show recording and reproducing characteristics of an embodiment of an optical memory device of the present invention; and
Fig. 6 schematically shows the construction of an optical magnetic disc memory device which constitutes an embodiment of an optical memory device of the present invention capable of recording, reproducing and/or erasing information.

An optical memory device of the present invention is described using an optical magnetic disc memory device as an example.

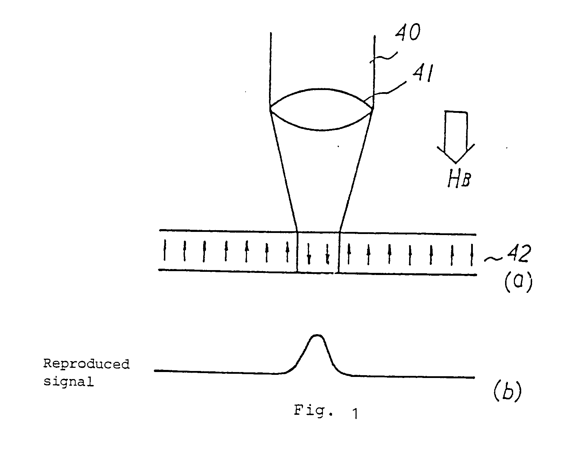

As shown in Fig. 1, the optical magnetic disc memory device records, reproduces and/or erases information by radiating laser beam 40 condensed by an objective lens 41 onto a recording medium having a magnetic film 42 whose easy magnetization axis is perpendicular to the film surface formed on a substrate.

To record information, the laser beam 40, condensed to about 1µm diameter by the objective lens 41 and modulated in intensity according to the recording signal, is radiated onto the magnetic film 42. Then, the irradiated part of the magnetic film 42 rises in temperature and decreases in the coercive force. With simultaneous application of an external bias magnetic field H_{B}, the magnetization direction is reversed so as to be oriented in the same direction as the bias magnetic field H_{B}. Information is thus recorded.

To reproduce the information, a linear polarized laser beam, of lower intensity than the beam for recording, is radiated on the magnetic film 42. Then, a magneto-optic effect (Kerr effect) causes the plane of polarization of the reflected light to be inclined. This inclination is detected by an analyzer and converted into a luminous intensity which is detected by an optical detector. A reproduced signal with positive peaks corresponding to the recorded marks is thus obtained, as shown in Fig. 1(b). Information can be reproduced by detecting the peak positions of the reproduced signal.

The process of extracting information from the reproduced data signal is described with reference to Fig. 2.

The signal reproduced by a reproducing head 1 is amplified by the amplifier 2 before being input to a differential circuit 4 and to an amplitude detector circuit 11 in a peak detector circuit 3 (enclosed by broken line). Signal output 13 from the differential circuit 4 is converted to a digital signal by a zero-cross detector circuit 5. The peak position is then detected in the following way. The circuitry comprising an inverter 6, a resistance 7, a capacitor 8 and a NOR gate 9 detects positive peak of the reproduced signal 12 or the falling edge of the signal output from the zero-cross detector circuit 5 and outputs a peak position-identifying signal 14. An AND gate 10 takes the logical product between the signal 14 and a signal output 15 from the amplitude detector signal 11, and outputs a peak detection signal 16 which corresponds to positive peaks alone. The peak detection signal 16 is transmitted to a data demodulator circuit where it is converted to information data.

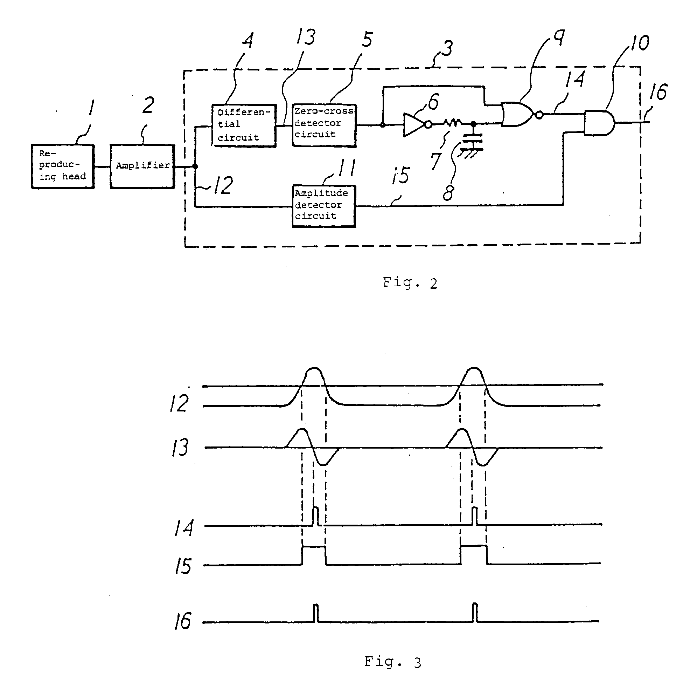

The above procedure is now described referring to Fig. 3 which shows the relevant signal waveforms. The same signals are allotted the same numbers in Figs. 2 and 3. The reproduced signal 12 has positive peaks at positions corresponding to recorded data portions of the memory disc. The reproduced signal 12 is converted to a differential signal 13 in the differential circuit 4. The differential signal 13 crosses the zero level from positive to negative side at the positive peak position of the reproduced signal 12. Accordingly, the signal output from the zero-cross detector circuit 5 coincides with the positive peak position. Therefore, the signal 14 has detected the positive peak position of the reproduced signal 12 by detecting the falling edge of the signal 13. The signal 14 and the amplitude detection signal 15 are input to the AND gate 10 which takes a logical product of them and outputs the peak detection signal 16 which corresponds to the positive peak alone.

The present embodiment adopts a recording method which enables data reproduction to be achieved by detecting the interval between reference marks. Such recording method is described now. A method of detecting the interval between reference marks is also described.

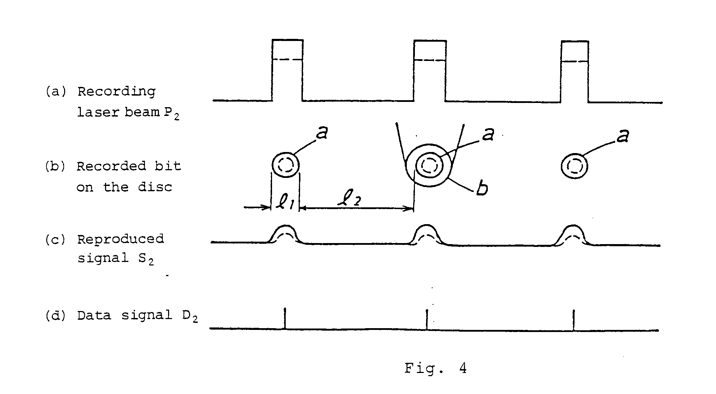

An optical magnetic disc memory device as an example of the optical memory device of the present invention uses the return-to-zero (RZ) method in recording data on a data recording medium (hereinafter called disc) in such a manner as to permit detection of the interval between reference marks for data reproduction. Figs. 4(a) and 4(b) show the recording and reproduction characteristics of a method in which each reference mark is a data-recorded bit. To record a reference mark, a recording laser beam P₂ (refer to Fig. 4(a)) is radiated on the disc after being modulated in intensity by the RZ method, as shown by a solid line, according to an information signal. Then, only the part of the magnetic film on the disc exposed to the laser beam of high intensity rises in temperature and reduces in coercive force. When an external auxiliary magnetic field is simultaneously applied to the disc in this state, the magnetization orientation is reversed so that a recorded bit "a" is formed as a reference mark on the disc (see Fig. 4(b)).

According to this method, the recorded bit length "ℓ₁" is shorter than the non-recorded bit length "ℓ₂". In Fig. 4(a), the broken lines indicate a laser beam of reduced intensity.

A light spot "b" (see Fig. 4(b)), which is obtained by condensing a laser beam of lower intensity than the recording laser beam P₂, is used for reproducing information from the recorded bit "a" formed on the disc. Reproduced signal S₂ thus obtained is shown in Fig. 4(c). Data signal D₂ shown in Fig. 4(d) is obtained by detecting peaks of the reproduced signal S₂. The data signal D₂ has detected the intervals between adjacent recorded bits "a" and "a" (i.e. the intervals between recorded marks formed by the RZ method).

However, as the difference in the area between the recorded portion and non-recorded portion within the range of the light spot "b" is very small, the reproduced signal S₂ reproduced by the light spot "b" from the recorded bit "a" formed by the RZ method has small amplitude. If the intensity of the recording laser beam P₂ is reduced as shown by the broken lines, the area of the recorded bit "a" becomes smaller, further reducing the amplitude of the reproduced signal S₂, which hampers satisfactory reproduction of information. This phenomenon is more conspicuous as the length of the recorded bit "a" is made smaller to raise the linear bit density for higher recording density. Therefore, when information is recorded and reproduced by the method in which recorded bit length "ℓ₁" is shorter than the non-recorded bit length "ℓ₂", reduction in the intensity of laser beam or increase in the recording density may result in less reliable information signal reproduction. Furthermore, the formation of recorded bits may possibly be hampered not only by the reduction in the laser beam intensity but also by deterioration of the recording sensitivity and of the recording capacity of the data recording medium.

For the purpose of solving the above problems, the reference marks are constituted by non-recorded portions of the recording medium.

Fig. 6 schematically shows the construction of an optical magnetic disc memory device, an example of an optical memory device in accordance with the invention, capable of recording, reproducing and erasing information.

102 is a semiconductor laser which emits a laser beam of a predetermined intensity. To record information, the recording laser beam P₁ emitted from the semiconductor laser 102 is converted by a collimator lens 103 into a parallel beam which is then converted to an approximately circular beam by a shaping prism 104. The beam is passed through a polarization splitter 105, a total reflection prism 106 and an objective lens 107 to be condensed to about 1µm diameter beam, and then radiated on the magnetic film surface on a disc 101. The disc 101 is a magnetic recording medium whose easy magnetization axis is perpendicular to the magnetic film surface.

In signal reproduction, a laser beam of lower intensity than that for recording is emitted from the semiconductor laser 102. The laser beam travels over the same route as in recording, and irradiates the magnetic film surface on the disc 101. Information-bearing light reflected from the magnetic film has its plane of polarization inclined due to the magneto-optic effect (Kerr effect) of the magnetic film. After passing through the objective lens 107, the total reflection prism 106 and the polarization beam splitter 105, the reflected information light is separated from the incident laser beam and split into two light beams by a polarization beam splitter 108. One of the two beams is led through a cylindrical lens 110 into an optical detector 111. A tracking reference signal and a focusing reference signal are obtained from the signal output from the optical detector 111. The other reflected information light beam is led to a halfwave plate 112 where the direction of polarization is rotated by a specified angle. Then the reflected light beam is split by a polarization beam splitter 114 into S-polarized light and P-polarized light components. Simultaneously, these information light components are detected by optical detectors 115 and 116, respectively, and converted to electric signals. Thus, to obtain reproduced signal of better S/N ratio, the optical magnetic disc memory device of this embodiments detects information light beam by the differential detection system which divides the information light into P-polarized light and S-polarized light components and obtains the difference between the detection signals of the P and S polarized light components.

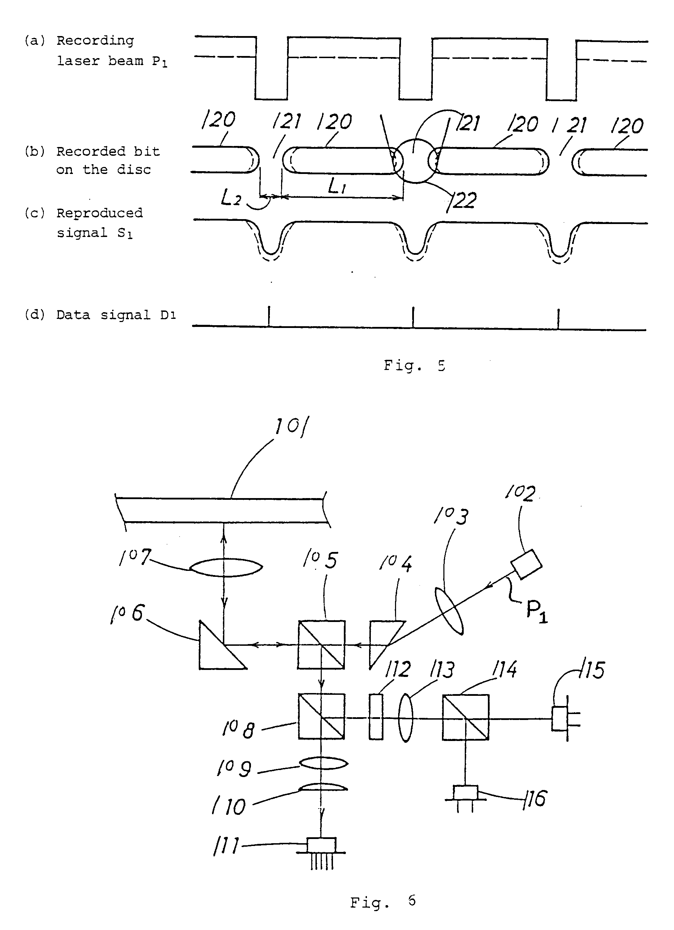

To permit a non-recorded portion of the recording medium to be used as a reference mark, the recording laser beam P₁ emitted from the semiconductor laser 102 is modulated in intensity by the RZ method so that the recorded bit length L₁ is longer than the non-recorded bit length L₂ as shown by solid line in Fig. 5(a). Then, only the part of the magnetic film on the disc 101 exposed to the laser beam of high intensity rises in temperature and reduces in coercive force. Application of external auxiliary magnetic field on the disc in this state causes the magnetization orientation to be reversed, so that a recorded bit 120 corresponding to the recording laser beam P₁ is formed on the disc 101 (see Fig. 5(b)). The broken line of Fig. 5(a) indicates recording laser beam P₁ of reduced intensity. According to this embodiment, even if intensity of the laser beam P₁ drops, reduction in the length of the recorded bit 120 is negligible as indicated by broken line in Fig. 5(b). Recorded bits 120 of satisfactory length can be formed in any case.

For signal reproduction, laser beam spot 122 is radiated on a non-recorded bit 121 as a reference mark. Since difference in the area between the recorded zone and the non-recorded zone is now larger than in the previously described method (Fig. 4(b)), the reproduced signal S₁ obtained has a larger amplitude as shown in Fig. 5(c). Besides, if the intensity of the recording laser beam P₁ drops as shown by the broken line, the amplitude of the reproduced signal S₁ is still sufficiently large as indicated by the broken line in Fig. 5(c). Accordingly, reliability of data signal D₁ (see Fig. 5(d)) will increase if it is obtained by detecting the interval between the non-recorded bits 121.

As mentioned above, recorded bits 120 of sufficient length are formed on the disc 101 and a satisfactory reproduced signal S₁ is obtained by the RZ method if the recorded bit length L₁ is made longer than the non-recorded bit length L₂. As a result, highly reliable data signal D₁ can be reproduced even with a laser beam of reduced intensity or with a high density recording medium. In the above embodiment, the influence of laser beam intensity reduction on the formation of recorded bits 120 is prevented. According to the present invention, it is possible to obtain reliable data signals even when the recording sensitivity or capacity of the data recording medium is deteriorated. In addition to the optical magnetic disc memory device, the recording and reproducing method as described above may be applied to other optical memory device which records, reproduces or erases information by using laser beam.

According to the present embodiment, since information is recorded by the RZ method so that recorded bit length is longer than non-recorded bit length, the recording characteristic is sufficiently good to reproduce signal of high quality. Therefore, it is possible to realise an optical memory device which reproduces data in a highly reliable manner.

## Claims

1. An optical memory device for recording and reproducing data by irradiating an optical data recording medium with a laser beam spot, the optical memory device comprising:
recording means for recording data by alternately forming along tracks on said recording medium first portions (120) and second portions (121) having different physical states according to whether or not the recording medium has been irradiated with the laser beam spot, the length (L₁) of each of said first portions being adjusted according to the data recorded, and being greater than the length (L₂) of each of said second portions;
detecting means for detecting said second portions and determining the interval between said second portions for reproduction of the recorded data,
characterised in that: said recording means form
said first portions (120) by irradiation with said laser beam spot so as to have a physical state changed from the physical state of the remaining region of the recording medium.

2. An optical memory device according to claim 1, wherein, in operation, said recording medium forms said first and second portions by modulating the intensity of the laser beam spot according to said data using a return-to-zero modulation method.

3. A method for recording and reproducing data on an optical data recording medium by irradiation of the recording medium with a laser beam spot, the method comprising the steps of:
recording data by alternately forming along tracks on said recording medium first portions (120) and second portions (121) having different physical states according to whether or not the recording medium has been irradiated with the laser beam spot, the length (L₁) of each of said first portions being adjusted according to the data recorded, and being greater than the length (L₂) of each of said second portions;
detecting said second portions and determining the interval between said second portions for reproduction of the recorded data,
characterised in that:
said first portions (120) are formed by said laser beam spot so as to have a physical state changed from the physical state of the remaining region of said recording medium.

4. A method according to claim 3, wherein said first and second portions are formed by modulating the intensity of the laser beam spot according to said data using a return-to-zero modulation method.

## Patentansprüche

1. Optische Speichereinrichtung für das Aufzeichnen und Reproduzieren von Daten durch Bestrahlen eines optischen Datenaufzeichnungsmediums mit einem Laserstrahlpunkt, wobei die optische Speichereinrichtung umfaßt:
Aufzeichnungsmittel für das Aufzeichnen von Daten durch abwechselndes Bilden erster Teile (120) und zweiter Teile (121), die einen unterschiedlichen physikalischen Zustand haben, je nachdem, ob das aufzeichnende Medium mit dem Laserstrahlpunkt bestrahlt worden ist oder nicht, entlang von Spuren auf dem aufzeichnenden Medium, wobei die Länge (L₁) jedes ersten Teils entsprechend den aufgezeichneten Daten justiert und größer als die Länge (L₂) jedes zweiten Teils ist,
Abfühlmittel für den Nachweis dieser zweiten Teile und das Bestimmen des Intervalls zwischen diesen zweiten Teilen für die Reproduktion der aufgezeichneten Daten,
dadurch gekennzeichnet, daß:
die ersten Teile (120) des aufzeichnenden Mittels durch Bestrahlen mit dem Laserstrahlpunkt sich so bilden, daß sie einen physikalischen Zustand haben, der gegenüber dem physikalischen Zustand des restlichen Bereichs des aufzeichnenden Mediums verändert ist.

2. Optische Speichereinrichtung nach Anspruch 1, bei welcher das aufzeichnende Medium die ersten und die zweiten Teile durch Modulieren der Intensität des Laserstrahlpunkts entsprechend dieser Daten unter Verwendung eines Modulationsverfahrens mit Rückkehr zu Null bildet.

3. Verfahren für das Aufzeichnen und Reproduzieren von Daten auf einem optischen Speichermedium durch Bestrahlen des aufzeichnenden Mediums mit einem Laserstrahlpunkt, wobei das Verfahren die folgenden Schritte umfaßt:
Aufzeichnen von Daten durch abwechselndes Bilden von ersten Teilen (120) und zweiten Teilen (121) entlang von Spuren auf diesem aufzeichnenden Medium, die einen unterschiedlichen physikalischen Zustand haben, je nachdem, ob das aufzeichnende Medium mit dem Laserstrahlpunkt bestrahlt worden ist oder nicht, wobei die Länge (L₁) jedes ersten Teils entsprechend den aufgezeichneten Daten justiert und größer als die Länge (L₂) jedes zweiten Teils ist und
das Abfühlen dieser zweiten Teile und Bestimmen des Intervalls zwischen diesen zweiten Teilen für das Reproduzieren der aufgezeichneten Daten,
dadurch gekennzeichnet, daß:
die ersten Teile (120) durch Bestrahlen mit dem Laserstrahlpunkt so gebildet worden sind, daß sie einen physikalischen Zustand haben, der gegenüber dem physikalischen Zustand des restlichen Bereichs des aufzeichnenden Mediums verändert ist.

4. Verfahren nach Anspruch 3, bei welchem die ersten und die zweiten Teile durch Modulation der Intensität des Laserstrahlpunkts entsprechend diesen Daten unter Verwendung eines Modulationsverfahrens mit Rückkehr zu Null gebildet werden.

## Revendications

1. Un dispositif de mémoire optique destiné à enregistrer et à reproduire des données en irradiant un support d'enregistrement optique de données avec un point de faisceau laser, le dispositif de mémoire optique comprenant un moyen d'enregistrement pour enregistrer des données en formant alternativement, le long de pistes sur ledit support d'enregistrement, des premiers segments (120) et des seconds segments (121) possédant des états physiques différents, selon que le support d'enregistrement a été irradié, ou non, avec le point de faisceau laser, la longueur (L₁) de chacun desdits premiers segments étant choisie en fonction des données enregistrées et étant supérieure à la longueur (L₂) de chacun desdits seconds segments, et un moyen de détection pour détecter lesdits seconds segments et pour déterminer l'intervalle qui les sépare afin de reproduire les données enregistrées, caractérisé en ce que ledit moyen d'enregistrement forme lesdits premiers segments (120) par irradiation avec ledit point de faisceau laser de façon à obtenir un état physique différent de celui de la région restante du support d'enregistrement.

2. Un dispositif de mémoire optique conforme à la revendication 1, caractérisé en ce que, lors du fonctionnement, ledit support d'enregistrement forme lesdits premiers et seconds segments en modulant l'intensité du point de faisceau laser en fonction desdites données par un procédé de modulation avec retour à zéro.

3. Un procédé d'enregistrement et de reproduction de données sur un support d'enregistrement optique de données par irradiation du support d'enregistrement avec un point de faisceau laser, le procédé comprenant les étapes consistant à enregistrer des données en formant alternativement, le long de pistes sur ledit support d'enregistrement, des premiers segments (120) et des seconds segments (121) possédant des états physiques différents, selon que le support d'enregistrement a été, ou non, irradié avec le point de faisceau laser, la longueur (L₁) de chacun desdits premiers segments étant choisie en fonction des données enregistrées et étant supérieure à la longueur (L₂) de chacun desdits seconds segments, et à détecter lesdits seconds segments et déterminer l'intervalle qui les sépare afin de reproduire les données enregistrées, caractérisé en ce que lesdits premiers segments (120) sont formés par ledit point de faisceau laser de façon à obtenir un état physique différent de celui de la région restante dudit support d'enregistrement.

4. Un procédé selon la revendication 3, caractérisé en ce que lesdits premiers et seconds segments sont formés en modulant l'intensité du point de faisceau laser en fonction desdites données, par un procédé de modulation avec retour à zéro.
